# EUROPÄISCHE PATENTSCHRIFT

(11) **EP 2 497 984 B1**
(45) Veröffentlichungstag und Bekanntmachung des Hinweises auf die Patenterteilung: **29.03.2017**
(21) Anmeldenummer: 12157500.5
(22) Anmeldetag: 29.02.2012
(51) Int. Cl.: F16K 17/32

(54) **Sicherheitsabsperrventil und Verfahren zum Absperren einer Gasleitung**
Safety blocking valve and method for blocking a gas line
Soupape d'arrêt de sécurité et procédé d'arrêt d'une conduite de gaz

(30) Priorität: 08.03.2011 DE 102011005260
(43) Veröffentlichungstag der Anmeldung: 12.09.2012
(73) Patentinhaber: Tyczka Totalgaz GmbH, 82538 Geretsried (DE)
(72) Erfinder: Munkhart, Zoltan, 82538 Geretsried (DE)
(74) Vertreter: Marschall, Stefan

(56) Entgegenhaltungen:
- EP-A2- 2 058 569
- US-A- 3 384 110
- US-A- 3 429 321

## Beschreibung

Die Erfindung betrifft ein Sicherheitsabsperrventil zum Absperren einer Gasleitung nach dem Oberbegriff des Patentanspruchs 1 und ein Verfahren zum Absperren einer Gasleitung, einer Entnahmeleitung eines Gasdruckbehälters und dergleichen.

Sicherheitsabsperrventile sperren beim Überschreiten eines definierten Gasdruckes eine Entnahmeleitung eines Gasdruckbehälters, eine Gasleitung und drgl. selbsttätig ab. Ein solches Sicherheitsabsperrventil ist bspw. in dem deutschen Gebrauchsmuster DE 87 005 83 U1 gezeigt. Dieses hat einen gegen einen Ventilsitz wirkenden federvorgespannten Ventilschieber, der über einen Endabschnitt einer verschwenkbaren Klinke in seiner Öffnungsstellung gehalten wird. Zum selbsttätigen Überführen des Ventilschiebers in seine Schließstellung ist eine über einen Schwenkarm auf die Klinke wirkende Sicherheitseinrichtung vorgesehen, die einen federvorgespannten, mit dem Schwenkarm in Wirkverbindung stehenden Bolzen und eine Membran aufweist. Beim Überschreiten eines an der Membran anliegenden definierten Gasdrucks wird der Bolzen mit einer Rückstellkraft beaufschlagt und entgegen seiner Vorspannung in eine Freigabeposition überführt. Dabei führt der Sperrbolzen eine Rückstellbewegung aus und nimmt den Schwenkhebel mit, so dass die Klinke freigegeben wird und um seine Schwenkachse schwenken kann. Die Vorspannfeder des Ventilschiebers entspannt sich und der Ventilschieber wird in Anlage mit dem Ventilsitz gebracht, so dass das Sicherheitsabsperrventil geschlossen ist. Um das Sicherheitsabsperrventil bspw. in einem Störfall in seine Schließstellung überführen zu können, ist eine manuelle Schließeinrichtung vorgesehen, mittels der die Klinke bei unverschwenkten Schwenkhebel und unabhängig vom Gasdruck freigegeben werden kann. Nachteilig an dieser Variante ist jedoch die aufwendige Klinken-Schwenkhebel-Mechanik, die zudem verhältnismäßig störanfällig ist. Weiterhin ist nachteilig, dass das Sicherheitsabsperrventil manuell nur vor Ort in seine Schließstellung geschaltet werden kann.

Ein alternatives Sicherheitsabsperrventil mit einem einfacheren Aufbau hat einen in eine Schließrichtung vorgespannten Ventilschieber, einen unmittelbar auf den Ventilschieber wirkenden vorgespannten Sperrbolzen zur Sicherung des Ventilschiebers in einer Öffnungsstellung und eine Membran zur Beaufschlagung des Sperrbolzens aufgrund eines Gasdruckes mit einer Rückstellkraft. Problematisch an diesem Sicherheitsabsperrventil ist jedoch, dass auch dieses Sicherheitsabsperrventil manuell nur vor Ort in seine Schließstellung überführt werden kann. Da das zuständige Bedienpersonal jedoch gewöhnlich räumlich entfernt von dem Sicherheitsabsperrventil in einer Meldestelle positioniert ist, muss dieses erst ausrücken, wodurch wertvolle Zeit ungenutzt verstreicht.

Aufgabe der vorliegenden Erfindung ist es, ein Sicherheitsabsperrventil, das die vorgenannten Nachteile beseitigt und ein schnelles manuelles Betätigen aus der Entfernung ermöglicht, sowie ein Verfahren zum Absperren einer Gasleitung zu schaffen.

Diese Aufgabe wird gelöst durch ein Sicherheitsabsperrventil mit den Merkmalen des Patentanspruchs 1 und durch ein Verfahren mit den Merkmalen des Patentanspruchs 11.

Ein erfindungsgemäßes Sicherheitsabsperrventil zum Absperren einer Gasleitung hat einen in Schließrichtung vorgespannten Ventilschieber, einen vorgespannten Sperrbolzen zur Sicherung des Ventilschiebers in einer Öffnungsstellung und eine Membran zur Beaufschlagung des Sperrbolzens aufgrund eines Gasdruckes mit einer Rückstellkraft. Erfindungsgemäß ist eine fernbetätigbare Freigabeeinrichtung zur Freigabe des Ventilschiebers unabhängig vom Gasdruck vorgesehen, die einen Stellantrieb zur Aufbringung der Rückstellkraft und ein mit dem Stellantrieb und mit dem Sperrbolzen in Wirkverbindung stehendes Betätigungselement zur Übertragung der Rückstellkraft auf den Sperrbolzen aufweist, wobei im Ruhezustand des Stellantriebs die Wirkverbindung kräfteübertragungsfrei geschaltet ist.

Ein derartiges Sicherheitsabsperrventil kann ferngesteuert und somit aus der Entfernung in seine Schließstellung überführt werden. Dabei wird dadurch, dass im Ruhezustand des Stellantriebs die Wirkverbindung zwischen dem Stellantrieb und dem Sperrbolzen kräfteübertragungsfrei geschaltet ist, keine starre Verbindung zwischen dem Stellantrieb und dem Sperrbolzen geschaffen, so dass im Ruhezustand des Stellantriebs die normale Sicherheitsfunktion nicht behindert und somit nicht in die Normalfunktion des Sicherheitsabsperrventils eingegriffen wird. Durch die körperliche Trennung des Betätigungselements von dem Stellantrieb können beide Elemente hinsichtlich ihrer jeweiligen Funktion Krafterzeugung/ Kraftübertragung optimal ausgelegt werden. So kann zur Erreichung eines direkten Ansprechverhaltens das Betätigungselement dehnungsfrei und der Stellantrieb mit einer kurzen Reaktionszeit ausgeführt werden. Des Weiteren ermöglicht die Freigabeeinrichtung, dass das Sicherheitsabsperrventil bei einem Defekt der Membran ebenfalls fernbetätigt geschlossen werden kann.

Bei einem Ausführungsbeispiel ist das Betätigungselement axial auf einer Bewegungsachse des Sperrbolzens geführt und von einer Vorspannfeder des Sperrbolzens zumindest abschnittsweise umgriffen. Hierdurch ist das Sicherheitsabsperrventil kompakt ausgeführt. Zudem werden bei Übertragung der Rückstellkraft von dem Stellantrieb auf den Sperrbolzen keine Momente erzeugt, die eine unnötige Belastung darstellen würden.

Bei einem bevorzugten Ausführungsbeispiel ist das Betätigungselement biegeweich ausgeführt. Beispielsweise ist das Betätigungselement ein Seil, ein Faden, ein Draht oder dergleichen und endseitig im Bereich des Sperrbolzens und des Stellantriebs angebunden ist. Ein derartiges Betätigungselement ist nur zur Übertragung von Zugkräften geeignet, und stellt somit im Normalbetrieb selbst im gespannten Zustand der von dem Gasdruck aufgebrachten Rückstellkraft keine Gegenkraft entgegen. Es kann metallisch, kunststoffbasiert, aus Kohlenstofffasern, Glasfasern, Aramidfasern, Naturfasern oder sonstigen Fasern bestehen und ist bevorzugterweise dehnungsfrei, so dass schnell und unmittelbar regiert werden kann. Beispielsweise ist es ein Nylonfaden, da dieser sehr elastisch und somit nahezu flexible geführt werden kann, unempfindlich gegenüber chemischen Einflüssen ist, eine hohe Hitzebeständigkeit aufweist und dehnungsfrei ist. Der Vorteil eines Metallfaden besteht zum Beispiel neben seiner chemischen und thermischen Beständigkeit unter anderem darin, dass mittels einer ständigen Widerstandsmessung der Zustand des Fadens jederzeit überwacht werden kann und somit der Faden einfach auf Defekte wie Haarrisse oder einen vollständigen Bruch untersucht und somit rechtzeitig ersetzt werden kann, so dass die Funktionsfähigkeit der Freigabeeinrichtung jederzeit gewährleistet ist. Selbstverständlich ist es auch möglich, einzelne Materialen miteinander zu kombinieren. So sieht eine Variante vor, einen Metallfaden als Kern in einen Kunststoffaden zu integrieren und somit einen Hybrid- bzw. Verbundfaden zu schaffen, der sowohl die Vorteile eines reinen Kunststofffadens als auch die Vorteile eines reinen Metallfadens aufweist.

Bei einem anderen Ausführungsbeispiel ist das Betätigungselement längenvariabel. Beispielsweise kann es als eine Schiebekulisse mit zumindest zwei relativ zueinander verschiebbaren und im Wirkeingriff miteinander stehenden Elementen ausgeführt sein, die bei einer Druckbelastung in Folge eines steigenden Gasdrucks ineinander verschoben werden und somit im Normalbetrieb der von dem Gasdruck aufgebrachten Rückstellkraft keine Gegenkraft entgegensetzen.

Ein bevorzugter Stellantrieb ist ein thermischer Aktuator. Derartige Aktuatoren haben eine kurze Reaktionszeit und erlauben die Entwicklung sehr großer Kräfte. Ferner sind sie kompakt ausführbar. Beispiele sind thermische Ausdehnungskapseln oder Formgedächtniskörper wie eine Feder aus einer Nitinollegierung. Nitinollegierungen neigen bei Wärme zu einer Änderung ihrer kristallinen Struktur von austenitisch zu martensitisch, wodurch sehr große Kräfte bei relativ geringem Energieverbrauch möglich sind, so dass Explosionsschutzbestimmungen nach ATEX eingehalten werden können.

Eine Variante des Stellantriebes sieht vor, diesen als einen Elektromagneten auszuführen, mittels dem das Betätigungselement in seine Freigabeposition bewegt werden kann. Ein Elektromagnet hat eine kurze Reaktionszeit, ist sehr kompakt, störunanfällig und erlaubt zudem die Verwendung eines starren Betätigungselementes wie einer zumindest abschnittsweise magnetisierbaren Stange. Das Bestätigungselement kann beispielsweise in der Ruheposition des Stellantriebs über einen Axialspalt von dem Elektromagneten beabstandet sein und bei Bestromung gegen den Elektromagneten gezogen werden. Der Axialspalt hat dabei eine Mindestbreite, die einem Rückstellweg des Sperrbolzens aus seiner Verriegelungsposition in seine Freigabeposition entspricht.

Bei einer anderen Variante ist der Stellantrieb als ein Elektromotor ausgebildet. Beispiele sind ein Drehantrieb zum Aufwickeln eines als Faden ausgebildeten Betätigungselements, ein Linearantrieb oder ein elektromechanischer Antrieb wie ein Spindelantrieb, der beispielsweise mit einem dem längenvariablen Betätigungselement kombiniert werden kann.

Zur Erfassung einer Ist-Position des Ventilschiebers kann ein Positionserfassungssystem vorgesehen sein. Dies hat bei einem Ausführungsbeispiel einen Mikrokontakt, mittels dem die aktuelle Position wie Öffnungsstellung oder Schließstellung des Ventilschiebers erfassbar ist. Unter anderem ist hierdurch bestimmbar, ob das Sicherheitsabsperrventil bereits durch die normale Sicherheitsfunktion in seine Schließstellung und somit in seine Soll-Position überführt wurde.

Zur Ansteuerung des Stellantriebs kann ein Datenfernübertragungssystem mit einer Empfangseinheit und einer Sendeeinheit vorgesehen sein, so dass aufgrund der Sendeeinheit auch die momentane Ventilschieberposition und Bestätigungsmitteilungen nach erfolgter Positionsveränderung an eine Meldestelle übermittelt werden können. Dabei ist das Datenfernübertragungssystem derart gestaltet, das eine Datenübermittlung per elektronischer Textnachrichten wie SMS und somit bequem per Telefon erfolgen kann.

Bei einem erfindungsgemäßen Verfahren zum Absperren einer Gasleitung mit einem derartigen Sicherheitsabsperrventil wird der den Ventilschieber in seiner Öffnungsstellung haltende Sperrbolzen durch Fernbetätigung des Stellantriebs mit der Rückstellkraft beaufschlagt, wodurch schnell und ortsfern auf sich ändernde Umgebungseinflüsse reagiert werden kann.

Bei einem Ausführungsbeispiel wird eine Ist-Position des Ventilschiebers automatisch erfasst. Wenn sich der Ventilschieber in seiner Öffnungsstellung befindet, wird der Ventilschieber manuell durch ferngesteuerte Ansteuerung freigegeben. Nach Verschieben des Ventilschiebers wird seine neue Schaltstellung automatisch erfasst und eine Bestätigungsmeldung erzeugt, um zu kontrollieren, ob die neue Schaltstellung der geschlossenen Soll-Position entspricht.

Sonstige vorteilhafte Ausführungsbeispiele der Erfindung sind Gegenstand weiterer Unteransprüche.

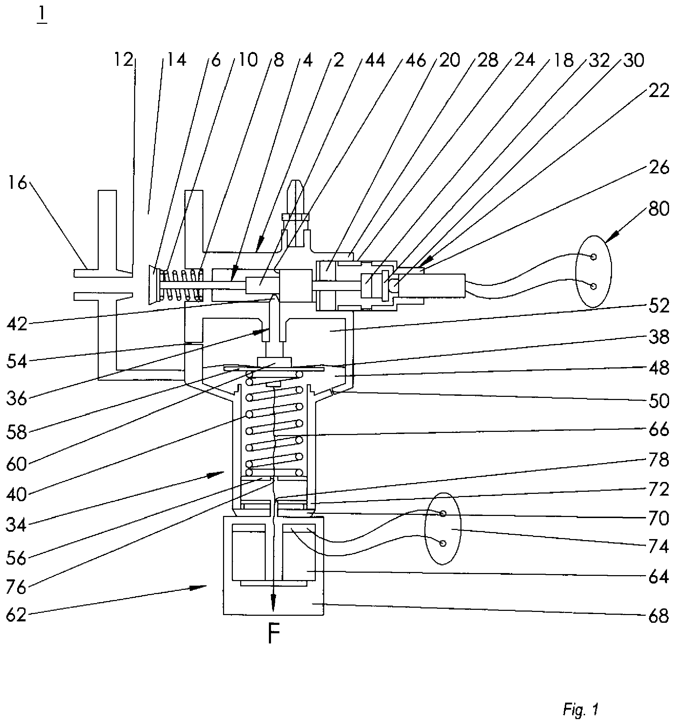

Im Folgenden wird die Erfindung anhand einer schematischen Figur näher erläutert. Die einzige Figur 1 zeigt einen Querschnitt durch ein erfindungsgemäßes Sicherheitsabsperrventil in seiner Öffnungsstellung.

Gemäß der Darstellung in Figur 1 hat ein erfindungsgemäßes Sicherheitsabsperrventil 1 zum Absperren einer Entnahmeleitung eines Gasdruckbehälters, einer Gasleitung und drgl. einen verschiebbar in einem Gehäuse 2 gelagerten Ventilschieber 4. Der Ventilschieber 4 hat einen tellerförmigen vorderen Abschnitt 6, der über eine in einer Vertiefung 8 abgestützte Vorspannfeder 10 in Richtung eines Ventilsitzes 12 und somit in Richtung seiner Schließstellung vorgespannt ist. Der Ventilsitz 12 ist innerhalb eines gehäuseseitigen Leitungsabschnitts 14 zwischen einem zulaufseitigen Anschlussstutzen 16 zum Anschluss eines stromaufwärtigen Abschnitts der Entnahmeleitung und einem nicht gezeigten ablaufseitigen Anschlussstutzen zum Anschluss eines stromabwärtigen Abschnitts der Entnahmeleitung ausgebildet.

Zur Überführung des Ventilschiebers 4 aus seiner Schließstellung, in der sich der Kopfabschnitt 6 in Anlage mit dem Ventilsitz 12 befindet, in seine gezeigte Öffnungsstellung weist der Ventilschieber 4 an seinem hinteren Abschnitt einen Dauermagneten 18 auf, der mit einem zwischen dem vorderen Abschnitt 6 und dem Dauermagneten 18 angeordneten gehäuseseitigen Elektromagneten 20 zusammenwirkt. Bei Bestromung erzeugt der Elektromagnet 20 eine auf den Dauermagneten 18 wirkende Abstoßungskraft, die so groß ist, dass die Federkraft der Vorspannfeder 10 überwunden wird und der Kopfabschnitts 6 vom Ventilsitz 12 abgehoben wird.

Zur Positionsbestimmung des Ventilschiebers 4 ist ein Positionserfassungssystem 22 vorgesehen, das mit einem Gewindeabschnitt 24 seines Systemgehäuses 26 in eine Gehäuseaufnahme 28 eingeschraubt ist. Es hat einen Mikrokontakt 30, der mit einem endseitigen Anschlag 32 des Ventilschiebers 4 zusammenwirkt.

Zum selbsttätigen Schließen des Sicherheitsabsperrventils 1 weist dieses eine Sicherheitseinrichtung 34 mit einem Sperrbolzen 36, einer Membran 38 und einer Bolzenfeder 40 auf.

Der Sperrbolzen 36 ermöglicht, dass nach einer Überführung des Ventilschiebers 4 in seine Öffnungsstellung der Elektromagnet 20 abgeschaltet werden kann. Er ist über die Bolzenfeder 40 mit einem Kopfabschnitt 42 gegen eine stufenförmige Erweiterung 44 des Ventilschiebers 4 in seine Verriegelungsposition vorgespannt und bildet dabei einen axialen Anschlag für eine Schulterfläche 46 des Ventilschiebers 4 aus.

Die Membran 38 ist zwischen dem Sperrbolzen 36 und der Bolzenfeder 40 angeordnet und dient als Trennwand zwischen einem Federraum 48, der über eine Entlastungsbohrung 50 zur Außenumgebung entlüftet ist, und einem Druckraum 52, der über eine Druckausgleichsbohrung 54 mit dem gehäuseseitigen Leitungsabschnitt 14 in Fluidverbindung steht, so dass im Druckraum 52 der in der Gasleitung vorliegende Gasdruck herrscht.

Die Bolzenfeder 40 ist in dem Federraum 48 angeordnet und an einer Konsole 56 abgestützt. An ihrem membranseitigen Endabschnitt ist ein Federteller 58 zur Bildung einer großflächigen Auflagefläche für einen radial erweiterten Fußabschnitt 60 des Sperrbolzens 36 und der Membran 38 angeordnet.

Sobald der in dem Druckraum 52 herrschende und auf die Membran 38 gegen die Federkraft der Bolzenfeder 40 wirkende Druck ausreicht, um eine Rückstellkraft F aufzubringen, die größer als die Federkraft der Bolzenfeder 40 ist, führt der Sperrbolzen 36 eine Rückstellbewegung aus. Dabei wird er aus seiner gezeigten Verriegelungsposition in eine Freigabeposition überführt und somit aus dem Eingriff mit dem Ventilschieber 4 gebracht. Die Vorspannfeder 10 kann sich entspannen und der Ventilschieber 4 wird in Anlage mit dem Ventilsitz 12 gebracht. Der Ventilschieber 4 befindet sich in seiner Schließstellung und die Gasleitung ist abgesperrt.

Zur fernbetätigbaren manuellen Zusteuerung der Gasleitung weist das Sicherheitsabsperrventil 1 eine Freigabeeinrichtung 62 mit einem Stellantrieb 64 und einem Betätigungselement 66 auf. Die Freigabeeinrichtung 62 ist derart ausgebildet, dass im Ruhezustand des Stellantriebs 64 die Funktion der Sicherheitseinrichtung 34 und somit die Normalfunktion des Sicherheitsabsperrventils 1 nicht beeinträchtigt ist. Mit anderen Worten, im Ruhezustand des Stellantriebs 64 lässt sich der Sperrbolzen 36 automatisch mittels des auf die Membran 38 wirkenden Gasdrucks aus seiner Verriegelungsposition in seine Freigabeposition überführen.

Der Stellantrieb 64 dient zur Aufbringung der Rückstellkraft F unabhängig vom Gasdruck. Er hat ein Maschinengehäuse 68 mit einem Gewindeabschnitt 70, mittels dem es in eine entsprechende Gehäuseaufnahme 72 eingeschraubt ist. Der Stellantrieb 64 ist als ein thermischer Aktuator aus einer Formgedächnislegierung ausgebildet und über einen elektrischen Anschluss 74 bestrombar. Bevorzugterweise ist der Stellantrieb 64 eine Nitinolfeder, d.h. eine Feder auf Basis einer Nitinollegierung.

Das Betätigungselement 66 stellt eine Wirkverbindung zwischen dem Stellantrieb 64 und dem Sperrbolzen 36 her und dient zur Übertragung der vom Stellantrieb 64 erzeugten Rückstellkraft F auf den Sperrbolzen 36. Es ist ein biegeweicher und dehnungsfreier Kunststofffaden und im Ruhezustand des Stellantriebs 64 ungespannt und somit entlastet. Im gespannten Zustand ist der Faden 66 axial auf einer Bewegungsachse des Sperrbolzens 36 geführt. Er ist durch eine Öffnung 76 in der Konsole 56 und durch eine Öffnung 78 in dem Gewindeabschnitt 70 geführt und endseitig an dem Federteller 58 sowie der Nitinolfeder 64 angebunden. Somit ist er abschnittweise von der Bolzenfeder 40 umgriffen.

Zur Fernbetätigung der Freigabeeinrichtung 62 weist das Sicherheitsabsperrventil 1 ein Datenfernübertragungssystem 80 mit einer Empfangseinheit und einer Sendeeinheit auf. Das Datenfernübertragungssystem 80 erlaubt das Senden und Empfangen von Textnachrichten per Telefon wie SMS und ist wie durch Linien angedeutet bevorzugterweise in das Positionserfassungssystem 22 integriert.

Im Folgenden wird ein beispielhaftes Verfahren zum Absperren einer Entnahmeleitung eines Gasdruckbehälters mittels des erfindungsgemäßen Sicherheitsabsperrventils 1 erläutert: Das Sicherheitsabsperrventil 1 befindet sich in seiner gezeigten Öffnungsstellung und die Gasleitung ist aufgesteuert. Die Öffnungsstellung wurde über das Positionserfassungssystem 22 erfasst und per SMS an eine Meldestelle gemeldet. Der Sperrbolzen 36 bildet mit seinem Kopfabschnitt 60 einen axialen Anschlag für den Ventilschieber 4 und der Elektromagnet 22 ist nicht bestromt. Die Nitinolfeder 64 ist nicht bestromt und der Faden 66 befindet sich im entspannten Zustand, so dass die Wirkverbindung zwischen der Nitinolfeder 64 und dem Sperrbolzen 36 kräfteübertragungsfrei ist.

Nach dem Erhalt einer Notfallmeldung wird von der Meldestelle vorzugsweise per SMS eine Anweisung zum Absperren der Entnahmeleitung an die Empfangseinheit des Datenfernübertragungssystems 80 übermittelt. Die Nitinolfeder 64 wird bestromt und dehnt sich aus, woraufhin der Faden 66 gespannt wird. Der Sperrbolzen 36 wird nun über die von dem Faden 66 hergestellte Wirkverbindung mit der Nitinolfeder 64 unabhängig von dem auf die Membran 38 wirkenden Gasdruck mit einer die Federkraft der Bolzenfeder 40 überwindenden Rückstellkraft F beaufschlagt und führt eine Rückstellbewegung aus. Er wird aus seiner gezeigten Verriegelungsposition in seine Freigabeposition überführt und gibt den Ventilschieber 4 frei. Die Vorspannfeder 10 entspannt sich und der vordere Abschnitt 6 läuft auf dem Ventilsitz 12 auf. Der Ventilschieber 4 befindet sich in seiner Schließstellung und die Gasleitung ist abgesperrt, so dass dem Gasdruckbehälter kein weiteres Gas entnommen werden kann. Die Schließstellung des Ventilschiebers 4 wird von dem Positionserfassungssystem 22 über den Mikrokontakt 30 erfasst und als Bestätigung über die Sendeeinheit des Datenfernübertragungssystems 80 an die Meldestelle per SMS übermittelt.

Bei einem alternativen Verfahren sind beispielsweise zwei befüllte Gasdruckbehälter mit jeweils einem Sicherheitsabsperrventils 1, 1' ausgerüstet. Wird nun eines der Sicherheitsventile 1 automatisch und unvorhergesehen geschlossen, wird die Schließstellung des geschlossenen Sicherheitsabsperrventils 1 über das Positionserfassungssystem 22 erfasst und über die Sendeeinheit an die Meldestelle gemeldet. Diese kann nun, um ein Leerfahren des zweiten Behälters zu verhindern, eine Anweisung zum Schließen des sich in seiner Öffnungsstellung befindende Sicherheitsabsperrventils 1' senden. Die Nitinolfeder 64' wird bestromt und der Sperrbolzen 36' wird in seine Freigabeposition überführt, woraufhin der Ventilschieber 4' in seine Schließstellung überführt wird und somit beide Sicherheitsabsperrventile 1, 1' geschlossen sind.

Offenbart ist ein Sicherheitsabsperrventil zum Absperren einer Gasleitung mit einem in Schließrichtung vorgespannten Ventilschieber, einem vorgespannten Sperrbolzen zur Sicherung des Ventilschiebers in einer Öffnungsstellung und mit einer Membran zur Beaufschlagung des Sperrbolzens aufgrund eines Gasdruckes mit einer Rückstellkraft, wobei eine fernbetätigbare Freigabeeinrichtung zur Aufbringung der Rückstellkraft und Rückführung des Sperrbolzens vorgesehen ist, die im Ruhezustand kräfteübertragungsfrei geschaltet ist, sowie ein Verfahren zum Absperren einer Gasleitung.

### Bezugszeichenliste

- 1: Sicherheitsabsperrventil
- 2: Gehäuse
- 4: Ventilschieber
- 6: vorderer Abschnitt
- 8: Vertiefung
- 10: Vorspannfeder
- 12: Ventilsitz
- 14: Leitungsabschnitt
- 16: Anschlussstutzens
- 18: Dauermagnet
- 20: Elektromagnet
- 22: Positionserfassungssystem
- 24: Gewindeabschnitt
- 26: Systemgehäuse
- 28: Gehäuseaufnahme
- 30: Mikrokontakt
- 32: Anschlag
- 34: Sicherungseinrichtung
- 36: Sperrbolzen
- 38: Membran
- 40: Bolzenfeder
- 42: Kopfabschnitt
- 44: Erweiterung
- 46: Schulterfläche
- 48: Federraum
- 50: Entlastungsbohrung
- 52: Druckraum
- 54: Druckausgleichsbohrung
- 56: Konsole
- 58: Federteller
- 60: Fußabschnitt
- 62: Freigabeeinrichtung
- 64: Stellantrieb
- 66: Betätigungselement
- 68: Maschinengehäuse
- 70: Gewindeabschnitt
- 72: Gehäuseaufnahme
- 74: Anschluss
- 76: Öffnung
- 78: Öffnung
- 80: Datenfernübertragungssystem
- F: Rückstellkraft

## Patentansprüche

1. Sicherheitsabsperrventil (1) zum Absperren einer Gasleitung mit einem in Schließrichtung vorgespannten Ventilschieber (4), einem vorgespannten Sperrbolzen (36) zur Sicherung des Ventilschiebers (4) in einer Öffnungsstellung und mit einer Membran (38) zur Beaufschlagung des Sperrbolzens (36) aufgrund eines Gasdruckes mit einer Rückstellkraft (F), **gekennzeichnet durch** eine fernbetätigbare Freigabeeinrichtung (62) zur Freigabe des Ventilschiebers (4) unabhängig vom Gasdruck, die einen Stellantrieb (64) zur Aufbringung der Rückstellkraft (F) und ein mit dem Stellantrieb (64) und mit dem Sperrbolzen (36) in Wirkverbindung stehendes Betätigungselement (66) zur Übertragung der Rückstellkraft (F) auf den Sperrbolzen (36) aufweist, wobei im Ruhezustand des Stellantriebs (64) die Wirkverbindung kräfteübertragungsfrei geschaltet ist.

2. Sicherheitsabsperrventil nach Anspruch 1, wobei das Betätigungselement (66) axial auf einer Bewegungsachse des Sperrbolzens (36) geführt ist und von einer Bolzenfeder (40) zumindest abschnittweise umgriffen ist.

3. Sicherheitsabsperrventil nach Anspruch 1 oder 2, wobei das Betätigungselement (66) biegeweich ist.

4. Sicherheitsabsperrventil nach Anspruch 1 oder 2, wobei das Betätigungselement (66) längenvariabel ist.

5. Sicherheitsabsperrventil nach einem der vorhergehenden Ansprüche, wobei der Stellantrieb (64) ein thermischer Aktuator ist.

6. Sicherheitsabsperrventil nach einem der Ansprüche 1 bis 4, wobei der Stellantrieb (64) ein Elektromagnet ist.

7. Sicherheitsabsperrventil nach einem der Ansprüche 1 bis 4, wobei der Stellantrieb (64) ein Elektromotor ist.

8. Sicherheitsabsperrventil nach einem der vorhergehenden Ansprüche, wobei ein Positionserfassungssystem (22) zur Erfassung einer Position des Ventilschiebers (4) vorgesehen ist.

9. Sicherheitsabsperrventil nach einem der vorhergehenden Ansprüche, wobei ein Datenfernübertragungssystem (80) zum Senden und Empfangen von Daten vorgesehen ist.

10. Verfahren zum Absperren einer Gasleitung mit einem Sicherheitsabsperrventil (1) nach einem der vorhergehenden Ansprüche, wobei ein durch einen vorgespannten Sperrbolzen (36) in seiner Öffnungsstellung gehaltener Ventilschieber (4) durch Fernbetätigung eines Stellantriebs (64) mit einer Rückstellkraft (F) beaufschlagt wird.

11. Verfahren nach Anspruch 10, mit den Schritten:
- automatisches Erfassen und Melden einer Öffnungsstellung des Ventilschiebers (4),
- manuelles Freigeben des Ventilschiebers (4), und
- automatisches Erfassen und Melden einer Schließstellung des Ventilschiebers (4).

## Claims

1. Safety blocking valve (1) for blocking a gas line, having a valve spool (4) which is spring-loaded in the closing direction, a spring-loaded locking pin (36) for securing the valve spool (4) in an open position and having a diaphragm (38) for applying a return force (F) to the locking pin (36) due to a gas pressure,
**characterized by**
a remotely operable release device (62) for releasing the valve spool (4) independently of the gas pressure, which comprises a servo drive (64) for applying the return force (F) and an actuating element (66), which is operatively connected to the servo drive (64) and to the locking pin (36), for transmitting the return force (F) onto the locking pin (36), wherein in the resting state of the servo drive (64) the operative connection is connected without the transmission of forces.

2. Safety blocking valve according to Claim 1, wherein the actuating element (66) is axially guided on an axis of motion of the locking pin (36) and at least partially encompassed by a spring pin (40).

3. Safety blocking valve according to Claim 1 or 2, wherein the actuating element (66) is flexible.

4. Safety blocking valve according to Claim 1 or 2, wherein the actuating element (66) is variable in length.

5. Safety blocking valve according to any one of the previous claims, wherein the servo drive (64) is a thermal actuator.

6. Safety blocking valve according to any one of Claims 1 to 4, wherein the servo drive (64) is an electromagnet.

7. Safety blocking valve according to any one of Claims 1 to 4, wherein the servo drive (64) is an electric motor.

8. Safety blocking valve according to any one of the previous claims, wherein a position detecting system (22) is provided for detecting a position of the valve spool (4).

9. Safety blocking valve according to any one of the previous claims, wherein a remote data transmission system (80) is provided for sending and receiving data.

10. Method for blocking a gas line using a safety blocking valve (1) according to any one of the previous claims, wherein a valve spool (4), which is held in the open position thereof by a spring-loaded locking pin (36), is subjected to a return force (F) by remote activation of a servo drive (64).

11. Method according to Claim 10, having the steps:
- automatically detecting and signalling an open position of the valve spool (4),
- manually releasing the valve spool (4), and
- automatically detecting and signalling a closed position of the valve spool (4).

## Revendications

1. Soupape d'arrêt de sécurité (1) pour le blocage d'une conduite de gaz, comportant un tiroir de soupape précontraint dans le sens de fermeture (4), un goujon d'arrêt précontraint (36) pour bloquer le tiroir de soupape (4) dans une position d'ouverture et une membrane (38) pour solliciter le goujon d'arrêt (36) sur la base d'une pression de gaz avec une force de rappel (F), **caractérisée par** un dispositif de déblocage actionnable à distance (62) pour débloquer le tiroir de soupape (4) indépendamment de la pression de gaz, qui présente une commande de réglage (64) pour appliquer la force de rappel (F) et un élément d'actionnement (66) en interaction avec la commande de réglage (64) et avec le goujon d'arrêt (36) pour transférer la force de rappel (F) sur le goujon d'arrêt (36), l'interaction étant déclenchée sans transfert de force en position de repos de la commande de réglage (64).

2. Soupape d'arrêt de sécurité selon la revendication 1, dans laquelle l'élément d'actionnement (66) est guidé axialement sur un axe de mouvement du goujon d'arrêt (36) et entouré du moins par sections d'un ressort de goujon (40).

3. Soupape d'arrêt de sécurité selon la revendication 1 ou 2, dans laquelle l'élément d'actionnement (66) est souple à la flexion.

4. Soupape d'arrêt de sécurité selon la revendication 1 ou 2, dans laquelle l'élément d'actionnement (66) est de longueur variable.

5. Soupape d'arrêt de sécurité selon une des revendications précédentes, dans laquelle la commande de réglage (64) est un actionneur thermique.

6. Soupape d'arrêt de sécurité selon une des revendications 1 à 4, dans laquelle la commande de réglage (64) est un électroaimant.

7. Soupape d'arrêt de sécurité selon une des revendications 1 à 4, dans laquelle la commande de réglage (64) est un moteur électrique.

8. Soupape d'arrêt de sécurité selon une des revendications précédentes, dans laquelle il est prévu un système de détection de position (22) pour détecter une position du tiroir de soupape (4).

9. Soupape d'arrêt de sécurité selon une des revendications précédentes, dans laquelle il est prévu un système de télétransmission de données (80) pour envoyer et recevoir des données.

10. Procédé de blocage d'une conduite de gaz au moyen d'une soupape d'arrêt de sécurité (1) selon une des revendications précédentes, dans lequel un tiroir de soupape (4) maintenu par un goujon d'arrêt précontraint (36) dans sa position d'ouverture est sollicité par actionnement à distance d'une commande de réglage (64) avec une force de rappel (F).

11. Procédé selon la revendication 10, comportant les étapes suivantes :
- détection automatique et signalement d'une position d'ouverture du tiroir de soupape (4),
- déblocage manuel du tiroir de soupape (4), et
- détection automatique et signalement d'une position de fermeture du tiroir de soupape (4).
